# EUROPÄISCHE PATENTSCHRIFT

(11) **EP 0 959 694 B1**
(45) Veröffentlichungstag und Bekanntmachung des Hinweises auf die Patenterteilung: **15.10.2003**
(21) Anmeldenummer: 97952824.7
(22) Anmeldetag: 29.11.1997
(51) Int. Cl.: A23L 1/302, A61K 31/375, A61K 9/06, A61K 9/00

(54) **VERFAHREN ZUR HERSTELLUNG EINES OXIDATIONSGESCHÜTZTEN VITAMIN-C-PRÄPARATS**
PROCESS FOR PRODUCING AN OXIDATION-PROTECTED VITAMIN C PREPARATION
PROCEDE DE PREPARATION D'UNE COMPOSITION A BASE DE VITAMINE C PROTEGEE EN OXYDATION

(30) Priorität: 31.01.1997 DE 19703469
(43) Veröffentlichungstag der Anmeldung: 01.12.1999
(73) Patentinhaber: Von Rhein, Wolfgang, 45134 Essen (DE)
(72) Erfinder: Von Rhein, Wolfgang, 45134 Essen (DE)
(74) Vertreter: Zenz, Joachim Klaus, Dipl.-Ing.
(86) Internationale Anmeldenummer: EP9706660
(87) Internationale Veröffentlichungsnummer: WO98033397

(56) Entgegenhaltungen:
- PATENT ABSTRACTS OF JAPAN vol. 095, no. 011, 26.Dezember 1995 & JP 07 223946 A (TAISHO PHARMACEUT CO LTD), 22.August 1995,
- PATENT ABSTRACTS OF JAPAN vol. 097, no. 005, 30.Mai 1997 & JP 09 009904 A (AROEESU:KK), 14.Januar 1997,
- BUNDESVERBANSD DER PHARM. INDUSTRIE E. V.: "Rote Liste 1993" , 1993, EDITIO CANTOR, AULENDORF/WüRTT.
- GENNARO: "Remington: The Science and Practice of Pharmacy" 19.ED., 1995, MACK PUBLISHING COMPANY, EASTON, PENNSYLVANIA

## Beschreibung

Vitamin-C-haltige Mischpräparate sind in gelee-förmiger oder pastöser Darreichungsform in Tuben aus metallhaltigem Material im Handel erhältlich. Aus der "Rote Liste 1993", EDITIO CANTOR, Aulendorf/Württemberg ist ein Multivitamin-Gelee zur Nahrungsergänzung bekannt. Dabei handelt es sich um ein Mischpräparat, dem Konservierungsstoffe und Antioxidationsmittel zur Stabilisierung zugesetzt sind. Andere Maßnahmen zum Oxidationsschutz und zur Konservierung sind weder der Verpackung noch dem Beipackzettel zu entnehmen.

Der Erfindung liegt die Aufgabe zugrunde, ein Vitamin-C-Präparat in gebrauchsfertiger Form zur Verfügung zu stellen, das einen hohen Oxidations- und Lichtschutz hat und mühelos dosiert und dargereicht werden kann.

Diese Aufgabe wird erfindungsgemäß durch die Merkmale des Patentanspruchs 1 gelöst

Im Zuge der Herstellung wird dafür gesorgt, daß der das Vitamin-C destabilisierende freie Sauerstoff entfernt und ferngehalten wird. Das Fernhalten von Sauerstoff wird durch die besondere Auswahl des Tubenmaterials auch während der Benutzungsdauer fortgesetzt. Nach dem Ausdrücken und Portionieren einer Vitamin-C-Dosis bleibt die Tube in dem eingedrückten Zustand, d.h. bei verringertem Volumen stehen.

In der Tube hat das gelförmige Vitamin-C-Präparat einen dauerhaften Schutz vor Licht und Oxidation und ist dementsprechend lange haltbar, selbst wenn die Tube teilweise oder weitgehend entleert worden ist. Nach Benutzung der Tube und Schließen des Tubendeckels gibt es innerhalb der Tube nämlich nur ein extrem geringes Luftvolumen, das höchstens dem Hohlraumvolumen des Tubendeckels entspricht. Bei geeigneter Konstruktion des Tubendeckels, beispielsweise in Form eines Rückschlagventils, kann auch dieses Restvolumen weitgehend eliminiert werden. Mit der Erfindung gelingt daher die bisher unerreichte Vereinigung der Vorteile langer Haltbarkeit und Lagerfähigkeit des Vitamin-C-Präparats (auch nach mehrmaligen Öffnen des Verschlusses) und die einfache und ergonomische Dosierbarkeit durch Ausdrücken einer Tube. Das erfindungsgemäß hergestellte Vitamin-C-Präparat kann daher als geschmacksverbessernder und gesundheitsfördernder Speisezusatz genutzt werden, und zwar bis zum vollständigen Aufbrauch des Tubeninhalts.

Es gibt verschiedene Möglichkeiten zum Austreiben des freien Sauerstoffs aus dem Wasser. Hierzu gehört das Evakuieren eines das Wasser aufnehmenden Behälters. Vorzugsweise wird aber der freie Sauerstoff durch Begasen mit einem Inertgas, insbesondere CO₂ oder auch N₂ aus dem Wasser ausgetrieben. Dieses Inertgas kann während der gesamten Behandlungsdauer, also sowohl während des Lösens der Ascorbinsäurekristalle im Wasser, des Zumischens des Gelbildners, des Gelierens und des Verfüllens des fertigen Vitamin-C-Präparats in Tuben als Schutzgasatmosphäre benutzt werden. Vorzugsweise erfolgt der Zusatz der Ascorbinsäurekristalle zum Wasser und des Einrühren des Gelbildners in das entgaste Wasser in getrennten Stufen und in getrennten Behältern.

Als Tubenmaterial eignet sich jedes luft- und lichtundurchlässige Material, das schlechte Elastizitätseigenschaften hat, also zu den typischen plastisch verformbaren Materialien gehört. Als besonders geeignet hat sich ein Stanniol-Material erwiesen, das vorzugsweise mit einer geschmacksneutralen Schicht, insbesondere mit einer dünnen Kunststoffschicht überzogen ist. Wichtig ist, daß die wenigstens eine Überzugsschicht die plastischen Eigenschaften des tragenden Tubenmaterials nicht wesentlich ändert, insbesondere die Tube nicht elastisch verformbar macht.

Es empfiehlt sich, die Tubentülle, die einen vergleichsweisen engen Öffnungsquerschnitt hat, relativ lang auszuführen, damit sich das Gel nach dem Öffnen und Schließen der Tube innerhalb des engen Tülleninnenraums zurückziehen kann. Eine Oxidation kann daher selbst nach langen Aufbewahrungszeiten nur an der winzigen Oberfläche des Tüllen-Innenquerschnitts stattfinden. Diese Restoxidation hat sich in der Praxis als unschädlich erwiesen.

## Patentansprüche

1. Verfahren zur Herstellung eines oxidationsgeschützten Vitamin-C-Produkts,
**dadurch gekennzeichnet,**
**daß** Ascorbinsäurekristalle und Wasser bereitgestellt werden;
**daß** Ascorbinsäurekristalle in Wasser gelöst werden;
**daß** diese Lösung mit einem Gelbildner vermischt und in einen pastösen Zustand gelieren gelassen wird, nachdem freier Sauerstoff aus dem Wasser ausgetrieben worden ist;
**daß** das Gel in eine Tube aus einem Material verfüllt wird, das gasdicht und - bei geringen Rückstellkräften - im wesentlichen plastisch verformbar ist;
**daß** die Tube vollständig mit Gel gefüllt und luftdicht verschlossen wird; und
**daß** das Lösen der Ascorbinsäurekristalle im Wasser, das Zumischen des Gelbildners, das Gelieren und das Verfüllen in Tuben unter einer Schutzgasatmosphäre erfolgt.

2. Verfahren nach Anspruch 1, **dadurch gekennzeichnet, daß** das Austreiben von freiem Sauerstoff aus dem Wasser durch Begasen mit einem Inertgas, beispielsweise mit CO₂ oder N₂ erfolgt.

3. Verfahren nach Anspruch 1, **dadurch gekennzeichnet, daß** das Austreiben von freiem Sauerstoff aus dem Wasser durch Evakuieren eines das Wasser aufnehmenden Behälters erfolgt.

4. Verfahren nach einem der Ansprüche 1 bis 3, **dadurch gekennzeichnet, daß** die Ascorbinsäurekristalle und der Gelbildner in das Wasser eingerührt werden.

5. Verfahren nach einem der Ansprüche 1 bis 4, **dadurch gekennzeichnet, daß** als Tubenmaterial Stanniol, insbesondere kunststoffbeschichtetes Stanniol verwendet wird.

## Claims

1. A method of manufacturing an oxidation-protected vitamin C product
**characterized by**
providing ascorbic acid crystals and water;
dissolving ascorbic acid crystals in water to form a solution;
mixing said solution with a gel-forming agent to form a gel into a pasty state, after expelling free oxygen from the water;
introducing the gel into a tube of a material which is gas-tight and deformable in a substantially plastic manner - with low restoring forces;
completely filling the tube with gel and sealing the tube in an airtight manner; and
effecting under a protective gas atmosphere the steps of dissolving the ascorbic acid crystals in water, adding and mixing the gel-forming agent, forming the gel, and filling the tubes.

2. Method according to claim 1, **characterized in that** expelling free oxygen from the water is done by introducing an inert gas, e.g. CO₂ or N₂.

3. Method according to claim 1, **characterized in that** expelling free oxygen from the water is done by evacuating a container accommodating the water.

4. Method according to one of claims 1 to 3, **characterized in that** the ascorbic acid crystals and the gel-forming agent are stirred into the water.

5. Method according to one of claims 1 to 4, **characterized in that** tin foil, in particular plastic-coated tin foil, is used as material for the tube.

## Revendications

1. Procédé de fabrication d'un produit de vitamine C protégé contre l'oxydation,
**caractérisé par le fait**
**qu'**on prend des cristaux d'acide ascorbique et de l'eau,
**qu'**on dissout les cristaux d'acide ascorbique dans l'eau,
**qu'**on mélange la solution obtenue avec un gélifiant et la laisse se gélifier en un état pâteux après avoir chassé l'oxygène libre de l'eau,
**qu'**on met le gel dans un tube en matière étanche aux gaz et, avec de faibles forces de rappel, déformable pratiquement plastiquement,
**qu'**on remplit complètement le tube de gel et le bouche de manière étanche à l'air, et
**qu'**on effectue la dissolution des cristaux d'acide ascorbique dans l'eau, l'addition de gélifiant, la gélification et la mise en tubes sous une atmosphère de gaz protecteur.

2. Procédé selon la revendication 1, **caractérisé par le fait qu'**on chasse l'oxygène libre de l'eau par balayage par un gaz inerte, par exemple par CO₂ ou N₂.

3. Procédé selon la revendication 1, **caractérisé par le fait qu'**on chasse l'oxygène libre de l'eau en faisant le vide dans un récipient qui reçoit l'eau.

4. Procédé selon l'une des revendications 1 à 3, **caractérisé par le fait qu'**on délaie les cristaux d'acide ascorbique et le gélifiant dans l'eau.

5. Procédé selon l'une des revendications 1 à 4, **caractérisé par le fait qu'**on utilise comme matière des tubes du papier d'étain, en particulier du papier d'étain revêtu de plastique.
